# EUROPEAN PATENT APPLICATION

(11) **EP 2 354 039 A1**
(43) Date of publication of application: **10.08.2011**
(21) Application number: 10151754.8
(22) Date of filing: 27.01.2010
(51) Int. Cl.: B65D 85/04, B23K 9/133, B65H 49/08

(54) **Container for welding wire with internal retainer**

(71) Applicant: Oerlikon Schweisstechnik GmbH, 67304 Eisenberg/Pfalz (DE)
(72) Inventor: Edelmann, Rolf, 67304 Eisenberg/Pfalz (DE); Zoller, Steffen, 67304 Eisenberg/Pfalz (DE)
(74) Representative: Pittis, Olivier

(57) **Abstract**

The invention deals with a container (1) comprising a welding wire spool (3) and an internal retainer (2) that is positioned on the spool (3) and is axially mobile in said container (1), said retainer (2) having a ring-like structure comprising a central aperture (5) for withdrawing the welding wire (4), and said retainer (2) exerting a contact pressure on said spool (3) for maintaining the spirals of the spool (3), characterized in that the weight and the size of the retainer (2) are chosen so as to exert on the spool (3) a contact pressure per unit area from between 10 and 25 N/m². The invention also concerns an arc welding process for arc welding one or several metal pieces, wherein an electric arc torch is fed with a welding wire (4), characterized in that said welding wire (4) is withdrawn from such a welding wire container.

## Description

The present invention concerns a container or a drum for packaging, storing, transporting and unwinding a coil or spool of welding wire, and the use of such a container in a welding operation, preferably an electric arc welding process, such as a MIG /MAG or submerged arc welding process.

One major problem encountered in automatic or robotic welding is the control of the welding wire, during its withdrawal from the drum or container where it is stored, as twists or nodes are often created in the wire by the spooling process. These twists and nodes are a serious problem as they can lead to subsequent welding defects in the welding joints thus obtained.

Several solutions have already been proposed for trying to solve these twisting problems.

For instance, EP-A-519424 discloses a container with a retainer device placed on the top of the coil and having an outer periphery matching the diameter of the inner wall of the container and an inner bell-mouthed portion defining a wire extraction opening. The retainer has a smaller size than the internal diameter of the container so that it can freely descend in the container in contact with the coil as the height of the coil decreases as the wire is being unwound from the coil.

EP-A-636098 teaches to use of a square box with an internal flat cover arranged on the wire coil. The cover has a peripheral square border that matches the internal shape of the box so as to retain the welding wire and avoid or limit the twists.

EP-A-1053189 discloses a polygonal box-like body for accommodating a circular coil of wire during the transportation and the unwinding of the coil and a retainer device arranged inside the body on the coil for preventing accidental entanglement of the wire turn during the unwinding of the wire from an upper end of the coil and a wire conduit device for the guiding the wire out from the body during the unwinding.

EP-A-1693139 discloses a drum for a welding wire coil comprising a wire holding device positioned on the coil for holding the loops in position during an unwinding of the wire. The holding device has a rigid central disc and a flexible cover with a dimension greater than an inner diameter of the drum so that corner portions of the cover slightly rise along an inner wall of the drum.

EP-A-1693140 teaches a drum with a conical, tapered or pyramidal inner wall formed of oblique pieces and comprising a rigid retainer or ring with a central orifice positioned on the coil and across which the wire passes, and further with flexible and deformable peripheral expansions projecting beyond the edge of the disc to maintain the wire loops.

EP-A-1357059 describes a welding wire packaging formed of an internal cylindrical drum and external square box.

As one can understand, the role of the retainers is to keep the wire spirals "flat" in the drum thereby avoiding or limiting the creation of nodes or twists in the wire, due to a too fast unwinding for example.

However, despite of the number of solutions already proposed, the unwinding of welding wires stored in containers or drums still often leads to twists or nodes, and to subsequent welding defects in the joints.

Hence, the problem is to provide a container for welding wire comprising an internal retainers that ensure a permanent and continuous feeding of the wire, at a nearly constant feeding force, and avoid stick slip effects to guarantee a stable welding process and no welding defects in the joints.

The solution of the present invention is a container comprising a welding wire spool and an internal retainer that is positioned on the spool and is axially mobile in said spool, said retainer having a ring-like structure comprising a central aperture for withdrawing the welding wire, and said retainer exerting a contact pressure on said spool for maintaining the spirals of the spool, characterized in that the weight and the size of the retainer are chosen so as to exert on the spool a contact pressure per unit area of between 10 N/m² and 25 N/m².

Indeed, the inventors of the present invention have discovered that, if the weight of the retainer is important and has to be adapted to the need, the pressure force exerted by the retainer on the spirals of the spool is a much more important parameter that should be carefully controlled and chosen as, otherwise, the wire can not be extracted smoothly and continuously from the container, as it often judders during its unwinding, which causes bad welding results.

Actually, too light retainers are not decelerating enough the wire unwinding speed as the pressure they exert on the spirals of the spool is not sufficient, whereas too heavy retainers are exerting a too strong force on the spirals thereby leading to an irregular unwinding.

Hence, choosing the surface and weight of the retainer so that it exerts on the spirals of the spool a contact pressure per unit area of between 10 N/m² and 25 N/m² solves the above problem, i.e. leads to a smooth and regular unwinding of the wire without twist or node formation.

Depending on the embodiment, the container of the present invention can comprise one or several of the following features :
- the weight and the size of the retainer are chosen so as to exert on the spool a contact pressure per unit area of at least 12 N/m².
- the weight and the size of the retainer are chosen so as to exert on the spool a contact pressure per unit area of less than 18 N/m².
- the ring-like structure forming the retainer is flat.
- the ring-like structure forming the retainer has an outer diameter of between 50 and 100 cm.
- the ring-like structure forming the retainer has an inner diameter of between 30 and 80 cm.
- the ring-like structure forming the retainer has a thickness of between 0.5 and 15 mm.
- the ring-like structure forming the retainer has a weight of between 0.2 and 5 kg, preferably less than 2 kg, more preferably of between 0.25 and 1 kg.
- the retainer is made of wood, plastic, cardboard, metal or any combination thereof, preferably of cardboard.
- the retainer comprises or is formed by a circular or polygonal body, in particular a square, hexagonal or octagonal body.
- the container body has a polygonal or a cylindrical body.
- the peripheral contour of the retainer matches the internal contour of the container.
- it is made of cardboard.
- the container body further comprises a bottom and a cover, preferably made of cardboard.

The invention further concerns a retainer for a welding wire container according to the invention, having a ring-like structure and a central aperture for the welding wire, characterized in that the weight and the size of the retainer are chosen so as to exert on a spool contained in said container, a contact pressure per unit area of between 10 and 25 N/m², preferably of at least 12 N/m² and/or of less than 18 N/m².

Further, the invention also deals with an arc welding process for arc welding one or several metal pieces, wherein an electric arc torch is fed with a welding wire, characterized in that said welding wire is withdrawn from a welding wire container according to the present invention.

Depending on the embodiment, the process of the present invention can comprise one or several of the following features :
- the welding torch is a MIG, a MAG, a TIG or a SAW-type torch.
- the torch is arranged on a robotic arm.
- the piece or pieces to be welded are automotive elements or parts, such as car parts.

The present invention will be better understood with regard to the following description of an embodiment of the container of the present invention, made with references to the accompanying figures among which:
- Figure 1 is a side view (in cross section) of a container according to the invention
- and Figure 2 is a view from above of the container of Fig. 1.

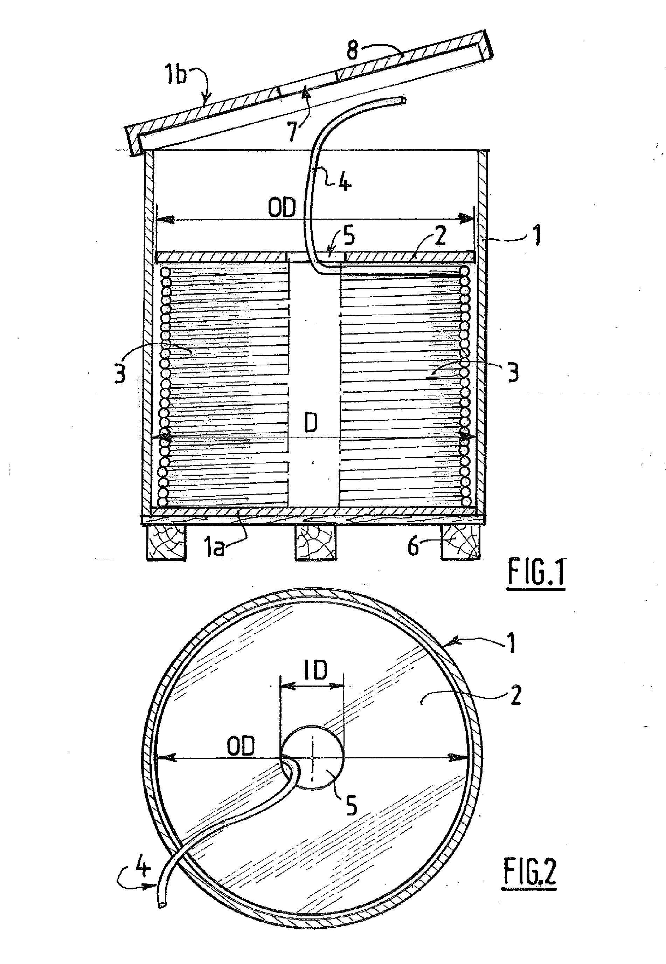

The present invention concerns a container 1 for packaging a coil of welding wire therein as shown in Figure 1, comprising an internal retainer 2 for maintaining the spirals of the welding wire during its unwinding.

The container 1 comprises a hollow body having one or several side walls or panels forming a circular or polygonal periphery, such as a square, hexagonal or octagonal shape, and a bottom 1a and a top 1b, such a removable cover 8 also comprising an orifice 7 for the wire 4. The container body can be arranged on a pallet 6. Preferably, the body, the bottom 1a and the top 1b is made of cardboard, of plastic material or a combination thereof.

A circular coil or spool 3 of welding wire 4 is inserted in the hollow body and lies on the bottom 1a. The welding wire can be a flux cored wire or a metal cored wire.

The hollow body of the retainer 1 has a diameter D that is slightly greater than the outer diameter OD of the retainer 2.

The circular coil 3 of welding wire is inserted into the polygonal hollow body 1 and is retained therein by the retainer 2 that is arranged on the top of the welding wire coil 3 in order to maintain the wire spirals during the transportation of the container and the unwinding of the coil for preventing accidental entanglement of the wire turn during the unwinding of the wire 4 of the coil 3.

The retainer 2 is formed by a flat ring or disk, preferably made of cardboard, having a central orifice 5 for passing the wire 4.

The shape or contour of the retainer 2 is preferably adapted to the inner contour of the retainer body 1, for example can match the inner wall of the container 1. During operation, the wire 4 passes through the central orifice 5 arranged at the centre of the retainer 2 and is subsequently sent to an arc welding torch, such as a MIG, MAG or TIG welding torch, preferably arranged on a robotic arm.

The dimensions and weight of the retainer 3 should be carefully chosen so as to provide a constant and continuous feeding of the wire 4 at nearly constant drawing force and further so that the spooled wire 3 is prevented from entangling and forming loops and nodes.

More precisely, according to the present invention, the weight and the size of the retainer 2 are chosen so as to exert on the spool 3 a contact pressure per unit area of between 10 and 25 N/m².

As shown in Figure 2, the outer diameter OD of the retainer 3 can be from about 50 to 100 cm, and its inner diameter ID from about 30 to 80 cm, the outer diameter OD being always greater than the inner diameter ID.

Further, the thickness of the retainer 2 can be from 0,5 mm to 15 mm, and its weight is comprised between 0.2 and 5 kg.

For example, good results have been obtained with a container 1 equipped with a retainer 2 having an outer diameter of 65 cm, an inner diameter of 37 cm, a thickness of 1,5 mm, and a weight of 0.35 kg.

Preferably, the retainer 2 covers the whole surface of the welding wire spool 3, as shown in Figure 1.

With a container of the invention is possible to avoid or to minimize the stick-slip effect (http://en.wikipedia.org/wiki/Stick-slip_phenomenon) and to obtain a smooth unwinding of the welding wire.

## Claims

1. Container (1) comprising a welding wire spool (3) and an internal retainer (2) that is positioned on the spool (3) and is axially mobile in said container (1), said retainer (2) having a ring-like structure comprising a central aperture (5) for withdrawing the welding wire (4), and said retainer (2) exerting a contact pressure on said spool (3) for maintaining the spirals of the spool (3), **characterized in that** the weight and the size of the retainer (2) are chosen so as to exert on the spool (3) a contact pressure per unit area from between 10 and 25 N/m².

2. Container according to the preceding claim, **characterized in that** the weight and the size of the retainer are chosen so as to exert on the spool a contact pressure per unit area of at least 12 N/m² and/or of less than 18 N/m².

3. Container according to any one of the preceding claims, **characterized in that** the ring-like structure forming the retainer (2) has an outer diameter (OD) of between 50 and 100 cm, an inner diameter (ID) of between 30 and 80 cm, and a thickness of between 0.5 and 15 mm.

4. Container according to any one of the preceding claims, **characterized in that** the ring-like structure forming the retainer (2) has a weight of between 0.2 and 5 kg, preferably of between 0.25 and 1 kg.

5. Container according to any one of the preceding claims, **characterized in that** the retainer (2) is made of wood, plastic, cardboard, metal or any combination thereof, preferably of cardboard.

6. Container according to any one of the preceding claims, **characterized in that** the retainer (2) comprises or is formed by a circular or polygonal body, in particular a square, hexagonal or octagonal body.

7. Container according to any one of the preceding claims, **characterized in that** the container body (1) has a polygonal or a cylindrical body.

8. Container according to any one of the preceding claims, **characterized in that** the peripheral contour of the retainer (2) matches the internal contour of the container (1).

9. Container according to any one of the preceding claims, **characterized in that** it is made of cardboard.

10. Container according to any one of the preceding claims, **characterized in that** the container body (1) further comprises a bottom (1a) and a cover (1b).

11. Retainer (2) for a welding wire container (1) according to any one of the preceding claims, having a ring-like structure and a central aperture (5) for the welding wire (4), **characterized in that** the weight and the size of the retainer (2) are chosen so as to exert on a spool contained in said container, a contact pressure per unit area of between 10 and 25 N/m²_{.}

12. Arc welding process for arc welding one or several metal pieces, wherein an electric arc torch is fed with a welding wire (4), **characterized in that** said welding wire (4) is withdrawn from a welding wire container (1) according to any one of claims 1 to 10.

13. Arc welding process according to claim 12, **characterized in that** the welding torch is a MIG, a MAG, a TIG or a SAW-type torch.

14. Arc welding process according to claims 12 or 13, **characterized in that** the torch is arranged on a robotic arm.

15. Arc welding process according to claims 12 or 13, **characterized in that** the piece or pieces to be welded are car elements or parts.

## Amended claims

### Amended claims in accordance with Rule 137(2) EPC.

**1.** Container (1) comprising a hollow body containing a welding wire spool (3) and an internal retainer (2), the internal retainer (2) being positioned on the spool (3) and being axially mobile in the hollow body of said container (1), said retainer (2) having a ring-like structure comprising a central aperture (5) for withdrawing the welding wire (4), and said retainer (2) exerting a contact pressure on said spool (3) for maintaining the spirals of the spool (3), the hollow body of the container (1) has a diameter (D) that is slightly greater than the outer diameter (OD) of the retainer (2), **characterized in that** the weight and the size of the retainer (2) are chosen so as to exert on the spool (3) a contact pressure per unit area from between 10 and 25 N/m².

**2.** Container according to the preceding claim, **characterized in that** the weight and the size of the retainer are chosen so as to exert on the spool a contact pressure per unit area of at least 12 N/m² and/or of less than 18 N/m².

**3.** Container according to any one of the preceding claims, **characterized in that** the ring-like structure forming the retainer (2) has an outer diameter (OD) of between 50 and 100 cm, an inner diameter (ID) of between 30 and 80 cm, and a thickness of between 0.5 and 15 mm.

**4.** Container according to any one of the preceding claims, **characterized in that** the ring-like structure forming the retainer (2) has a weight of between 0.2 and 5 kg, preferably of between 0.25 and 1 kg.

**5.** Container according to any one of the preceding claims, **characterized in that** the retainer (2) is made of wood, plastic, cardboard, metal or any combination thereof, preferably of cardboard.

**6.** Container according to any one of the preceding claims, **characterized in that** the retainer (2) comprises or is formed by a circular or polygonal body, in particular a square, hexagonal or octagonal body.

**7.** Container according to any one of the preceding claims, **characterized in that** the container body (1) has a polygonal or a cylindrical body.

**8.** Container according to any one of the preceding claims, **characterized in that** the peripheral contour of the retainer (2) matches the internal contour of the container (1).

**9.** Container according to any one of the preceding claims, **characterized in that** it is made of cardboard.

**10.** Container according to any one of the preceding claims, **characterized in that** the container body (1) further comprises a bottom (1a) and a cover (1b).

**11.** Retainer (2) for a welding wire container (1) according to any one of the preceding claims, having a ring-like structure and a central aperture (5) for the welding wire (4), **characterized in that** the weight and the size of the retainer (2) are chosen so as to exert on a spool contained in said container, a contact pressure per unit area of between 10 and 25 N/m²_{.}

**12.** Arc welding process for arc welding one or several metal pieces, wherein an electric arc torch is fed with a welding wire (4), **characterized in that** said welding wire (4) is withdrawn from a welding wire container (1) according to any one of claims 1 to 10.

**13.** Arc welding process according to claim 12, **characterized in that** the welding torch is a MIG, a MAG, a TIG or a SAW-type torch.

**14.** Arc welding process according to claims 12 or 13, **characterized in that** the torch is arranged on a robotic arm.

**15.** Arc welding process according to claims 12 or 13, **characterized in that** the piece or pieces to be welded are car elements or parts.
